# EUROPÄISCHE PATENTANMELDUNG

(11) **EP 2 382 859 A2**
(43) Veröffentlichungstag der Anmeldung: **02.11.2011**
(21) Anmeldenummer: 11163864.9
(22) Anmeldetag: 27.04.2011
(51) Int. Cl.: A01G 1/00, A01G 9/02

(54) **Verfahren zur Herstellung eines Bauwerkes und ein Bauwerk aus technischen und pflanzlichen Komponenten**

(30) Priorität: 27.04.2010 DE 102010018586
(71) Anmelder: Helix Pflanzen GmbH, 70806 Kornwestheim (DE)
(72) Erfinder: Ludwig, Ferdinand, 70191, Stuttgart (DE); Roesler, Christoph, 74429, Sulzbach-Laufen (DE)
(74) Vertreter: Maser, Jochen

(57) **Zusammenfassung**

Die Erfindung betrifft ein Verfahren zur Herstellung eines Bauwerkes (11), ein Pflanzbehältersystem für ein Bauwerk (11) sowie ein Bauwerk (11) aus technischen und pflanzlichen Komponenten, welches zumindest eine bepflanzte Wand (15) umfasst, wobei einzelne oder alle Pflanzbehälter (14, 15), die für einen Aufbau der Wand (15) eingesetzt werden, mit einem Pflanzsubstrat (16) zumindest teilweise befüllt werden und in einzelnen oder in allen mit Pflanzsubstrat (16) befüllten Pflanzbehältern (14, 15) eine oder mehrere Pflanzen (18) vorkultiviert oder eingepflanzt werden, so dass die Triebe der Pflanzen (18) aus zumindest einer Seitenwand des Pflanzbehälters (14, 15) zumindest teilweise herausragen und ein oder mehrere nebeneinander angeordnete Pflanzbehälter (14, 15) und mehrere Pflanzbehälter (14, 15) übereinander gestapelt und zur Wand (15) zusammengesetzt werden. (Hierzu Figur 1a)

## Beschreibung

Die Erfindung betrifft ein Verfahren zur Herstellung eines Bauwerks aus technischen und pflanzlichen Komponenten, welches zumindest eine bepflanzte Wand umfasst, Pflanzbehältersystem für eine Baumwand sowie ein daraus gebildetes Bauwerk aus technischen und bepflanzten Komponenten zur Bildung einer bepflanzten Wand.

Im Straßenbau sind beispielsweise Schallschutzwände bekannt, welche mit offenporigen Ziegeln oder sonstigen offenporigen Verkleidungselementen versehen sind, um eine Schallschutzwirkung zu erzielen. Diese verschmutzen stark oder setzen sich zu, wodurch die Schallschutzwirkung gemindert wird. Darüber hinaus weisen solche Schallschutzwände insbesondere in Großstädten den Nachteil auf, dass ökologische und ästhetische Zusatznutzen nicht gegeben sind. Aufgrund der zunehmenden Feinstaubbildung und der Klimaerwärmung ist es weiterhin wünschenswert, vermehrt Pflanzen einzubinden, durch welche diese Nachteile vermieden werden können.

Bislang sind für solche Schallschutzwände keine Wandsysteme bekannt, welche die ökologischen, technischen und ästhetischen Ansprüche hinreichend erfüllen.

Aus der DE 60 2005 004 415 T2 sind Pflanzbehälter zur Bildung einer bepflanzbaren Mauer bekannt. Diese Pflanzbehälter weisen einen Rahmen auf, welcher festvergitterte Seiten aufweist oder mit einem Maschengewebe überzogen ist. Eine Vorderseite des Pflanzbehälters ist mit einem herausnehmbaren vergitterten oder mit Maschengewebe überzogenen Rahmen gebildet. Diese quaderförmigen Pflanzbehälter werden zeilen- und spaltenweise übereinander angeordnet, wobei diese durch Schrauben miteinander verbunden sind. Eine aus solchen Pflanzbehältern gebildete Wand wird über Abstandshalter zu einer Mauer fixiert. Auf der Sichtseite der verpflanzten Mauer können einzelne Pflanzen aus der Seitenwand herauswachsen. Zur Versorgung dieser Mehrzahl der in dem jeweiligen Pflanzbehälter angeordneten Pflanzen ist ein inneres Bewässerungssystem vorgesehen.

Diese Anordnung weist den Nachteil auf, dass grundsätzlich der Anschluss eines Bewässerungssystems erforderlich ist, um eine bepflanzte Mauer sicherzustellen. Darüber hinaus ist eine feste Gebäudewand erforderlich, um die verpflanzbaren Pflanzbehälter zur Bildung einer bepflanzten Mauer anzuordnen und zu befestigen. Weiterhin ist die Montage aufwändig. Durch die vorgenannten Nachteile ist auch die Flexibilität im Einsatz beschränkt.

Der Erfindung liegt deshalb die Aufgabe zugrunde, ein Verfahren zur Herstellung eines Bauwerks aus technischen und pflanzlichen Komponenten, ein Pflanzbehältersystem für ein Bauwerk aus technischen und pflanzlichen Komponenten sowie ein daraus gebildetes Bauwerk zur Bildung einer bepflanzten Wand vorzuschlagen, welche flexibel einsetzbar und aufbaubar ist sowie ökologische, technische und ästhetische Vorteile erzielt werden.

Diese Aufgabe wird erfindungsgemäß durch ein Verfahren zur Herstellung eines Bauwerks aus technischen und pflanzlichen Komponenten, welches zumindest eine bepflanzte Wand umfasst, gelöst, bei dem einzelne oder alle Pflanzbehälter, die für einen Aufbau der bepflanzten Wand eingesetzt werden, mit einem Pflanzsubstrat zumindest teilweise befüllt werden und in einzelnen oder allen mit Pflanzsubstrat befüllten Pflanzbehältern vorkultivierte Pflanzen eingesetzt oder die Pflanzen in den Pflanzbehältern vorkultiviert werden, so dass die Triebe der Pflanzen aus zumindest einer Seitenwand des Pflanzbehälters zumindest teilweise herausragen und bei dem ein oder mehrere nebeneinander angeordnete Pflanzbehälter und mehrere Pflanzbehälter übereinander gestapelt und zur Wand zusammengesetzt werden und die in den Pflanzbehälter eingesetzten oder vorkultivierten Pflanzen durch Aufpfropfen oder festes oder dauerhaftes Aufeinanderdrücken durch Verwachsen untereinander verbunden werden, wobei eine unterste im Boden eingesetzte Pflanze mit der ersten im Pflanzbehälter sich darüber befindenden Pflanze verwachsen wird.

Dadurch wird ein stabiles und selbsttragendes Bauwerk beziehungsweise eine begrünte Wand geschaffen, die einen relativ einfachen Aufbau und eine hohe Modularität aufweist. Durch die vorkultivierten und weiter wachsenden Pflanzen kann den ästhetischen Ansprüchen entsprochen werden, da sich solche Bauwerke beziehungsweise Wände mit zunehmender Zeitdauer vollständig begrünen und/oder mit strauchartigen oder baumartigen Pflanzen bewachsen werden oder oberhalb der Wand einen Strauch oder eine Baumkrone ausbilden.

Gleichzeitig ist eine aktive Feinstaubbindung ermöglicht, wobei der Feinstaub bei einem Regen wiederum abgewaschen und im Boden gebunden wird, so dass eine erneute Feinstaubbindung möglich wird. Des Weiteren ist durch ein solches vegetatives Bauwerk eine Klimaverbesserung durch die kühlende Wirkung des Blattwerkes der Pflanzen gegeben. Auch kann bei einer regelmäßigen Pflege einer solchen bepflanzten oder begrünten Wand die beim Schnitt anfallende Blattmasse als Biomasse der regenerativen Energieversorgung zugeführt werden.

Des Weiteren wird insbesondere bei strauch- oder baumartigen Pflanzen mit zunehmender Zeitdauer aus den einzelnen Pflanzen in den jeweiligen übereinander gestapelten Pflanzbehältern in relativ kurzer Zeit durch Pflanzenaddition eine physiologische Einheit bzw. ein Gesamt-Organismus geschaffen. Es kann somit in kurzer Zeit eine Verlängerung der Einzelpflanze erzielt werden, so dass diese an unterschiedliche Bauhöhe schnell anpassbar ist und die Wachstumsdauer erheblich verkürzt ist. Vor und vor allem oberhalb der Wand kann sich eine Pflanzenkrone, insbesondere Baumkrone, ausbilden, die sich durch die verwachsenen Stämme außerhalb und/oder vor der Wand vom Boden aus selbst mit Wasser versorgen kann. In einem solchen Fall spricht man auch von einem Pumpeffekt, welcher insbesondere durch die große Blattmasse entsteht. Durch aktive Bewässerung und die beschriebene vegetative Verbindungstechnik kann eine zusätzlich Blattfläche bzw. ein größeres Kronenvolumen entstehen, welches sich bei einer konventionellen Begrünung oder Bepflanzung von Wänden nicht entwickeln kann. Eine Bepflanzung des obersten Pflanzbehälters mit Bäumen oder Sträuchern ohne Pflanzenaddition, das heißt, dass diese Pflanzen ausschließlich im obersten Behälter wurzeln, ist dabei nicht vorgesehen. Auch ein Durchwurzeln der gesamten Wand von oben nach unten ist nicht vorgesehen. Eine Feinstaubbindung kann sowohl durch die Bepflanzung der Wand als auch zusätzlich durch die gegebenenfalls ausgebildete Baumkrone stattfinden.

Eine weitere bevorzugte Ausgestaltung des Verfahrens sieht vor, dass die übereinander angeordneten Pflanzen miteinander verbunden werden. Dadurch kann eine direkte Linie zwischen der untersten und der obersten Pflanze geschaffen werden. In Abhängigkeit der gewünschten Verästelung beziehungsweise Abdeckung der Sichtseite durch ein Gehölz können auch zusätzliche seitliche Pflanzadditionspunkte vorgesehen sein.

Eine weitere bevorzugte Ausgestaltung des Verfahrens sieht vor, dass vor dem Übereinanderstapeln der Pflanzbehälter ein Fundament im Boden gesetzt wird und anschließend die Pflanzbehälter auf das Fundament aufgesetzt werden. Dadurch erfolgt die Fundamentbildung unabhängig von der Anlieferung der vorkultivierten Pflanzbehälter. Darüber hinaus können eine einheitliche Produktion der vorkultivierten Pflanzbehälter ermöglicht und die Fundamente an die entsprechenden Bedingungen des Einbauortes angepasst werden. Bevorzugt können auf dem Fundament Aufständerungen gelagert werden, welche als Verbindung zwischen dem Fundament und den Pflanzbehältern dienen, so dass dadurch die Flexibilität im Einsatz der Fundamente erhöht wird.

Eine weitere bevorzugte Ausgestaltung des Verfahrens sieht vor, dass nach dem Herstellen der verwachsenen Pflanzenanordnung die Wurzeln der einzelnen Pflanzen in den jeweiligen Pflanzbehältern von der Pflanzenanordnung abgetrennt und die Pflanzenanordnung durch Wurzeln im Boden versorgt werden. Dadurch ist die Ausbildung der Baumkrone nicht durch die Größe des Pflanzbehälters beschränkt, indem sich die Wurzeln ausbilden können, sondern die Pflanzenanordnung kann sich vielmehr aus dem Boden selbst versorgen und die Wurzeln sich entsprechend entfalten. Somit dienen die vorkultivierten Pflanzen in den einzelnen Behältern lediglich dazu, um schnell eine hochwachsende Pflanzenanordnung zu schaffen, so dass der Zeitraum erheblich verkürzt und durch ein natürliches Pflanzenwachstum eine über die Höhe des Bauwerkes hinaus sich erstreckende Pflanzenanordnung geschaffen wird.

Die der Erfindung zugrunde liegende Aufgabe wird des Weiteren durch ein Pflanzbehältersystem zur Bildung eines Bauwerkes gelöst, welche aus zumindest einem ersten und zumindest einem zweiten Pflanzbehälter bzw. einem zumindest einem ersten und zumindest einem zweiten Pflanzbehältertyp besteht. Der erste Pflanzbehälter umfasst eine Tragstruktur, welche ein Rastermaß aufweist, die durch einen Boden mit einer quadratischen Grundfläche miteinander verbunden sind. Zwischen den Stützen sind Aussteifungselemente vorgesehen, welche die Stützen zueinander positionieren. Zwischen den zwei Stützen ist eine Seitenwand anbringbar. Die Stützen weisen an deren oberen Enden einen ersten Verbindungsabschnitt und an deren unteren Enden einen zweiten Verbindungsabschnitt auf. Beim Übereinanderstapeln von Pflanzbehälter greifen der erste und der zweite Verbindungsabschnitt ineinander ein. Der zweite Pflanzbehälter oder der zweite Pflanzbehältertyp entspricht im Aufbau dem ersten Pflanzbehältertyp, ist jedoch doppelt ausgebildet bzw. zwei erste Pflanzbehältertypen sind in Reihe hintereinander angeordnet und miteinander verbunden. Durch diese Ausgestaltung eines Pflanzbehältersystems mit einem ersten Pflanzbehältertyp und einem zweiten Pflanzbehältertyp, bei dem der erste Pflanzbehältertyp als sogenannter "1-er Baustein" und der zweite Pflanzbehältertyp als "2-er Baustein" ausgebildet ist, wird ermöglicht, dass flexible Geometrien einer Wand aus diesen Pflanzbehältern in einfacher Weise aufgebaut werden kann, wobei durch die 2-er Pflanzbehälter ein Halbverband beim Aufbau einer Wand ermöglicht ist, wodurch ein verfestigter Wandaufbau ermöglicht ist. Durch den 1-er Pflanzbehälter kann beispielsweise ein geradliniger Wandabschluss einer Mauerwand erzielt werden oder ein entsprechendes Auffüllen für solche Abschnitte, die mit einem 2-er Pflanzbehälter nicht möglich ist.

Eine bevorzugte Ausgestaltung des Wandbehältersystems sieht vor, dass der Boden des Pflanzbehälters und/oder die zumindest eine Seitenwand des Pflanzbehälters als Gitterrost oder Gitterelement ausgebildet ist. Dadurch wird ein im Aufbau einfacher, aber stabiler Pflanzbehälter geschaffen, der zur Aufnahme und Speicherung eines Pflanzsubstrats ermöglicht.

Die Pflanzen können aus dem Pflanzbehälter herauswachsen, so dass sowohl eine flächige Begrünung der Wand durch Pflanzen, insbesondere durch Bodendecker, Stauden etc., als auch ein Baumwachstum ermöglicht sind. Die Pflanzbehälter können entweder so ausgestaltet sein, dass die Pflanzen aus den Außenseiten der Seitenwände herauswachsen. Sie können aber auch so ausgestaltet sein, dass die Außenseiten der Seitenwände geschlossen sind. Dann sind die Pflanzbehälter an der Unterseite derart ausgestaltet, dass es den Pflanzen der jeweils darunterliegenden Lage möglich ist, an der Oberseite aus dem Pflanzbehälter herauszuwachsen.

Die Pflanzbehälter, insbesondere der Boden und/oder die zumindest eine Seitenwand, sind gemäß einer bevorzugten Ausführungsform mit beispielsweise einem Vlies oder Gewebe als Hüllstruktur ausgekleidet. Dadurch kann die Tragstruktur unter statischen Gesichtspunkten ausgelegt werden, um insbesondere stabile Seitenwände für die selbsttragenden Pflanzbehälter zu schaffen. Das Vlies oder Gewebe hält das Pflanzsubstrat innerhalb der Tragstruktur zurück. Alternativ kann vorgesehen sein, dass die Trag-Hüllstruktur miteinander kombiniert ist, so dass das zusätzliche Auskleiden der Pflanzbehälter nicht erforderlich ist.

Die Pflanzbehälter sind bevorzugt mit einem Pflanzsubstrat befüllt, welches aus einem durchwurzelbaren, organischen und/oder anorganischen Material und/oder einer daraus gebildeten Mischung besteht. Dieses Pflanzsubstrat wird an die vorgesehene Begrünung/Bepflanzung angepasst.

Bevorzugt ist vorgesehen, dass eine Höhe der Seitenwand des Pflanzbehälters derart ausgebildet ist, dass diese mit dem darüber angeordneten Pflanzbehälter eine Auswachsspalte bildet. Dies bedeutet, dass die obere Abschlusskante der Seitenwand gegenüber einem Auflagepunkt an der Stütze des Pflanzbehälters, auf welchem sich ein darüber angeordneter Pflanzbehälter abstützt, nach unten versetzt ausgebildet ist. Dadurch kann einerseits ein definierter Spalt gebildet werden, aus dem die Pflanze ohne Beeinträchtigung herauswachsen kann. Zum anderen wird zwischen den einzelnen Lagen der Pflanzbehälter eine Trennebene ausgebildet, so dass die übereinandergestapelten Pflanzbehälter nicht unmittelbar aufeinander aufliegen, d.h. dass der Boden nicht unmittelbar auf einer Oberfläche des darunterliegenden Pflanzbehälters eingebrachten Substrat aufliegt.

Die der Erfindung zugrunde liegende Aufgabe wird des Weiteren durch ein Bauwerk aus technischen und pflanzlichen Komponenten gelöst, welches zumindest eine bepflanzte oder begrünte Wand umfasst, die aus einem oder mehreren nebeneinander anordenbaren und mehreren übereinander stapelbaren Pflanzbehältern des Pflanzbehältersystems aufgebaut ist, von denen einzelne oder alle Pflanzbehälter mit Pflanzsubstrat zumindest teilweise befüllt und in einzelnen oder allen mit Pflanzsubstrat befüllten Pflanzbehältern Pflanzen eingesetzt sind, deren Triebe zumindest teilweise aus einer Außenseite einer Seitenwand der Pflanzbehälter herausragen und miteinander verbindbar sind und dass die Pflanzbehälter in einem Mauerwerkverband oder insbesondere Halbverband stapelbar sind. Durch eine solche Wand können sich sowohl strauchartige als auch baumartige Pflanzen am oberen Ende des Bauwerkes ausbilden, die durch die Pflanzenaddition der Einzelpflanzen in den Pflanzbehältern sich mit Wasser aus dem Boden oder Baugrund versorgen, auf dem das Bauwerk aufgebaut ist. Zusätzlich oder alternativ kann die gesamte Wandfläche durch Bodendecker, Stauden, Kletterpflanzen und dergleichen begrünt sein. Diese Pflanzen können sich das Wasser ebenfalls aus dem Untergrund entnehmen. Solche Bauwerke ermöglichen eine flächendeckend bewachsene Ansichtfläche und ein baumartiges Pflanzenwachstum durch Bepflanzung in Kombination mit vegetativer Verbindungstechnik/Pflanzenaddition. Darüber hinaus kann insbesondere bei einem baumartigen Pflanzenwachstum bei Anwendung der vegetativen Verbindungstechnik eine zusätzliche Aussteifung und Verankerung des Bauwerkes über die Stamm- und Wurzelbildung erfolgen. Gleichzeitig wirken solche Pflanzen nicht als Belastung für das Bauwerk, sondern können vielmehr dessen Statik unterstützen. Die übereinander gestapelten Pflanzbehälter sind selbsttragend, so dass eine selbsttragende Wand ausgebildet ist.

Zur Sicherung der übereinander angeordneten Pflanzbehälter ist insbesondere ein Gerüst vorgesehen, welches zumindest eine vertikal ausgerichtete Gerüststütze umfasst, durch welche der oder die Pflanzbehälter in vertikaler Richtung gleitend geführt und in horizontaler Richtung stabilisiert sind. Diese Anordnung wird durch den sich selbst tragenden und sich in Wand-Längsrichtung selbst aussteifenden Wandaufbau ermöglicht. Dies ermöglicht einen einfachen, nicht durch das Eigengewicht der Wand/der Pflanzbehälter vertikal belasteten Gerüstaufbau.

Die Gerüststützen des Gerüstes können bevorzugt ein- oder beidseitig der Pflanzbehälter und/oder zwischen benachbarten Pflanzbehältern und/oder innerhalb der Pflanzbehälter angeordnet sein. Die Anordnung und Auswahl der Gerüststütze als auch die Anzahl der verwendeten Gerüststützen erfolgt bevorzugt in Abhängigkeit der jeweiligen baulichen Situation und Umgebung.

Zur Ausgestaltung einer Gleitstütze besteht diese vorzugsweise aus einem Rohr, einer Hülse, einem zumindest abschnittsweise offenen Rohr oder einem offenen Profil. Dadurch können einfache Metallkonstruktionen zur Herstellung einer solchen Stütze vorgesehen sein, an welche ein in vertikaler Richtung verschiebbares Halteelement geführt werden kann, das mit dem Pflanzbehälter fest verbunden ist. Beispielsweise kann an einem obersten Pflanzbehälter ein Rohrstück vorgesehen sein, welches in eine Hülse beziehungsweise Rohrhülse an der Gerüststütze eingreift und somit in vertikaler Richtung gleitend und in horizontaler Richtung stabilisierend fixiert ist. Eine solche Anordnung kann auch vertauscht eingesetzt werden. Aufgrund der insbesondere selbstsichernden Anordnung der Pflanzbehälter übereinander genügt eine solche Anordnung am obersten Pflanzbehälter. Zusätzlich können dazwischenliegend ebenfalls nochmals solche Verbindungsstellen zwischen den einzelnen Pflanzbehältern und der Gerüststütze geschaffen werden. Alternativ kann die Gerüststütze auch als C-förmiges Profil oder als T-förmiges Profil ausgebildet und durch eine entsprechende Halterung zum vertikal gleitenden und horizontal sichernden Angriff an diesen Profilen an den Pflanzbehältern befestigt sein.

Eine bevorzugte Ausgestaltung des Bauwerks sieht vor, dass die Gerüststützen des Gerüstes in den Untergrund eingespannt sind, insbesondere in einem Fundament eingestellt sind, oder an einem Zug-Druck-Fundament befestigt sind. Die zumeist aus mehreren Lagen der Pflanzbehälter aufgebaute Wand beziehungsweise das Bauwerk erzeugt zum Beispiel durch Windlasten normalerweise am Fußpunkt des Bauwerkes ein Biegemoment, das heißt, Zug- und Druckkräfte, die durch das Gerüst aufgenommen werden. Hierfür sind die Gerüststützen, die vertikal ausgerichtet sind, bevorzugt im Boden eingespannt. Beispielsweise können Einzel-, Streifen-, Beton-, Schraub- Bohrpfahlfundamente oder dergleichen vorgesehen sein, die vorbereitend in den Untergrund eingesetzt werden, um anschließend die Gerüststützen darin einzusetzen, einzustellen oder darauf aufzubauen. Alternativ kann eine Art Zug-Druck-Fundament vorgesehen sein, insbesondere bei einer beidseitigen Anordnung der Gerüststützen. Bei dieser vorteilhaften Ausgestaltung des Gerüstes steht das aus den Pflanzbehältern gebildete Bauwerk selbst nicht auf dem Fundament des Gerüstes auf. Deshalb können am Fußpunkt des Bauwerkes auch nur vertikale Druckkräfte, die aus dem Eigengewicht resultieren, in den Untergrund eingeleitet werden, da alle Horizontalkräfte von den Gerüststützen über die Fundamente aufgenommen werden.

Des Weiteren kann bevorzugt zwischen oder benachbart zu den einzelnen Fundamentstäben oder pfostenartigen Ankern zumindest ein Wasserspeicher angeordnet oderzugeordnet sein.

Sofern die Wasserspeicherung unter der Wand angeordnet wird, ist diese entsprechend druckfest. Die Pflanzen können dann auf das Wasser des Wasserspeichers zurückgreifen, wenn dieser in der Form einer Rigole ausgebildet ist, d. h., dass er eine durchbrochene oder poröse Wand hat. Rigolen/Wasserspeicher können im einfachsten Fall aber auch aus einer Kiesschüttung bestehen, die viele Hohlräume aufweist und ggf. mit Geo-Vlies umhüllt ist.

Bei der Pflanzenaddition werden im Regelfall die untersten Pflanzen in den Untergrund gesetzt. Vor allem diese Pflanzen können das Wasser aus dem Boden bzw. den im Boden eingebrachten Rigolen etc. aufnehmen. Für die Pflanzen in den untersten Pflanzbehältern gilt dies nicht, da der Pflanzbehälter bevorzugt nicht durchwurzelbar ist. Diese Wasserspeicher können insbesondere durch Regenwasserauffangbecken oder Regenwasserspeicher, die beispielsweise unterhalb oder benachbart von Fahrbahnen, Parkplätzen und dergleichen gebildet werden, versorgt werden oder werden unmittelbar mit Oberflächenwasser gespeist. Dadurch kann das Oberflächenwasser bei Regenfällen für die Wasserversorgung der Pflanzen an der bepflanzten Wand verwendet werden. Damit wird nicht nur das öffentliche Kanalnetz entlastet, sondern es kann auch eine solche bepflanzte Wand ohne Leitungswasser bewässert werden. Dies führt zu einer höheren ökologischen Wertigkeit.

Eine weitere bevorzugte Ausgestaltung der Erfindung sieht in den Pflanzbehältern Bewässerungskomponenten vor, welche beim Stapeln der Pflanzbehälter übereinander und miteinander verbindbar sind und eine integrierte Bewässerung bilden. Bei diesen Bewässerungskomponenten handelt es sich bevorzugt um Tropfschläuche oder poröse Schläuche mit Schnellverschlusskupplungen als Anschluss, um insbesondere beim Übereinanderstapeln der einzelnen Pflanzbehälter gleichzeitig ein Verbinden dieser Bewässerungsschläuche zu ermöglichen. Diese können bevorzugt vorfixiert in dem Tragkörper beziehungsweise der Tragstruktur befestigt sein, so dass die Herstellung der Wand und gleichzeitig auch das integrierte Bewässerungssystem vereinfacht sind. Durch die insbesondere Ausgestaltung eines Auswachsspaltes zwischen zwei übereinander angeordnete Pflanzbehälter wird ermöglicht, dass eine freie Auflageebene auf eine Reihe von Pflanzbehälter für Bewässerungsschläuche geschaffen ist und aufgrund der ausgebildeten Trennschicht zwischen den einzelnen Transportbehältern eine einfache Montage gegeben ist. Diese integrierte Bewässerung wird bevorzugt wieder durch den Wasserspeicher ermöglicht. Dadurch kann auch bei einer längeren Trockenperiode die Bepflanzung des Bauwerkes mit Feuchtigkeit versorgt werden. Alternativ kann vorgesehen sein, dass die Pflanzbehälter lagenweise verlegt und nach Abschluss einer Lage ein durchgehender Bewässerungsschlauch ausgelegt wird. Diese Enden der Schläuche werden dann über eine zentrale Zuführungsleitung versorgt.

Ebenso können die Pflanzbehälter mit einem integrierten Bewässerungssystem ausgebildet sein, so dass die Behälter mit Schnellkupplungen verbunden werden können, das bedeutet, ein Bewässerungssystem, das in der Anzucht bereits verwendet wird, kommt auch in dem Bauwerk zur Anwendung.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1a: ein schematischer Querschnitt des erfindungsgemäßen Bauwerkes,
- Figur 1b: eine schematische Seitenansicht des Bauwerkes gemäß Figur 1a,
- Figuren 2a und b: perspektivische Ansichten von Pflanzbehältern zum Aufbau der bepflanzten oder begrünten Wand,
- Figur 3: eine perspektivische Ansicht von übereinander gestapelten Pflanzbehältern,
- Figuren 4a bis c: schematische Ansichten der alternativen Ausführungsformen von einem Bauwerk mit einem Gerüst,
- Figur 5: eine schematische Ansicht des Bauwerkes an einer Hauswand oder sonstigen Wand und
- Figur 6: eine schematische Seitenansicht eines in den Erdbau eingebundenen Bauwerkes.

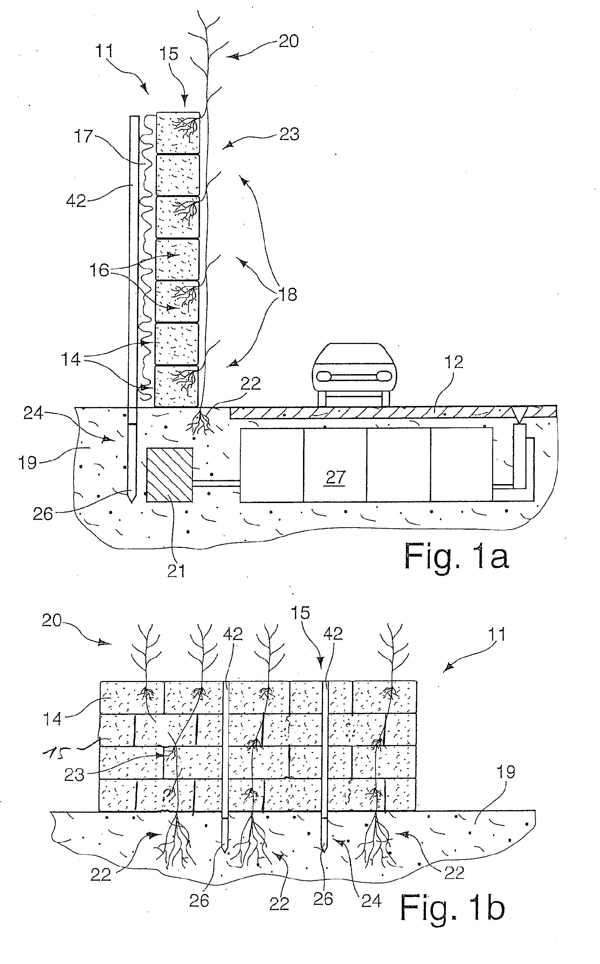

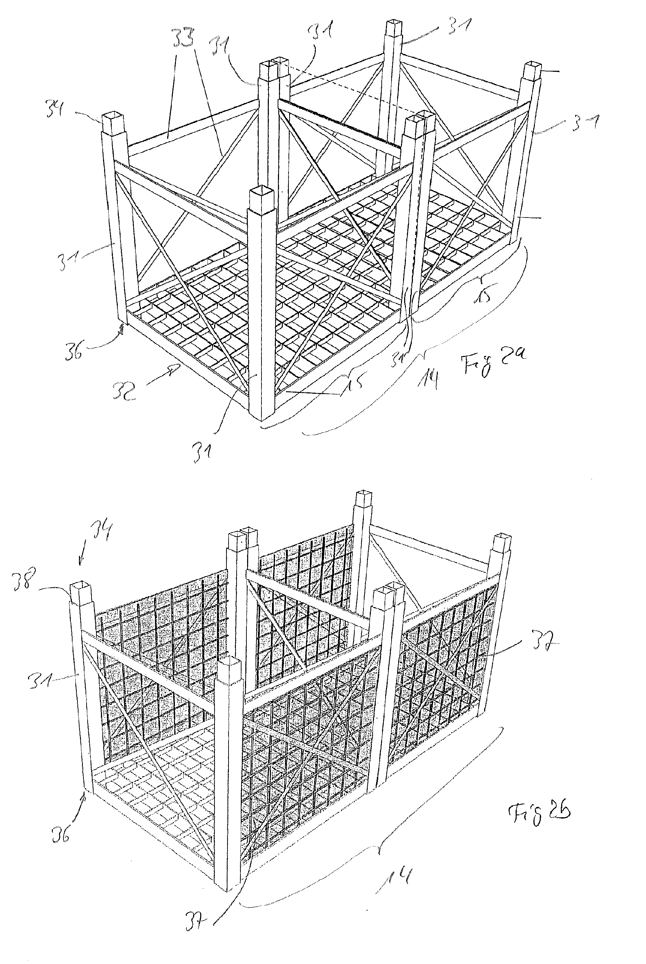

In Figur 1a ist eine schematische Seitenansicht auf ein Bauwerk 11 dargestellt, welches beispielsweise als Sichtschutz- oder Schallschutzwand an einer Fahrbahn 12 angrenzend ausgebildet ist. Das Bauwerk 11 ist in einer weiteren Seitenansicht in Figur 1b dargestellt und besteht aus einer Wand 15, die aus mehreren nebeneinander und mehreren übereinander gestapelten Pflanzbehältern 14, 15 eines Pflanzbehältersystems aufgebaut ist, welche nachfolgend in den Figuren 2a und b näher beschrieben werden. Einzelne oder alle Pflanzbehälter 14 sind zumindest teilweise, vorzugsweise vollständig, mit Pflanzsubstrat 16 befüllt. In einzelnen oder allen mit Pflanzsubstrat 16 befüllten Pflanzbehältern 14 sind eine oder mehrere Pflanzen 18 eingesetzt und insbesondere vegetativ vorproduziert, so dass deren Trieb oder Triebe zumindest teilweise aus der Seitenwand des Pflanzbehälters 14 herausragen. Beispielsweise können in allen die Wand 15 bildenden Pflanzbehältern 14 Pflanzen 18 vorgesehen sein. Ebenso können auch nur in jedem zweiten oder jeden dritten Pflanzbehälter 14 übereinander oder benachbart Pflanzen 18 vorgesehen sein.

Nach dem Übereinanderstapeln der Pflanzbehälter 14 werden die Triebe der Pflanzen 18 teilweise durch Aufpfropfen oder Aufdrücken miteinander verbunden beziehungsweise verwachsen diese miteinander. Dadurch kann innerhalb sehr kurzer Zeit eine Pflanze 18, insbesondere ein Strauch oder Baum, entstehen, der am oberen Ende des Bauwerkes 11 eine Baumkrone 20 aufweist und über einen durchgehenden Stamm verfügt, um über die Wurzeln 22 einer untersten Pflanze 18, die direkt in den Untergrund 19 beziehungsweise den Boden gepflanzt werden, mit Wasser aus dem Boden 19 oder insbesondere aus einem Wasserspeicher 21, der unterhalb des untersten Pflanzbehälters 14 im Boden 19 integriert ist, sich selbst zu versorgen. Nachdem die einzelnen Triebe der Pflanzen 18 zu einer Pflanzenanordnung 23 durch die vegetative Verbindungstechnik miteinander verwachsen sind und die im oberen Ende des Bauwerkes sich ausgebildete Baumkrone 20 durch Wurzeln 22 der untersten Pflanze 18 versorgt wird, werden die einzelnen Triebe, deren Wurzeln in den einzelnen Pflanzbehältern 14 sind, von der durch Pflanzaddition hergestellten Pflanzenanordnung 23 getrennt. Der Boden 19 zum Einwachsen der Wurzeln 22 der untersten Pflanze 18 kann durch das Erdreich, eine aufbereitete Substratschicht oder eine Vegetationstragschicht ausgebildet sein.

Die Pflanzen 18 können bei einer gemäß Figur 1a dargestellten Wand 15 einseitig oder beidseitig aus der Seitenfläche herausragen. Ebenso kann gemäß Figur 1a beispielsweise auf einer Seite der Wand 15 eine baumartige Bepflanzung und auf der gegenüberliegenden Seite der Wand 15 ein vollflächiger Blattbewuchs 17, beispielsweise durch Efeu oder dergleichen, vorgesehen sein. Es sind auch jegliche Mischformen denkbar. Z. B., dass auf einer Wandseite abwechselnd vegetativ verbundene, baumartige Pflanzen und eine Bepflanzung mit Bodendecken und eine Begrünung von unten z. B. mit kletternden/kriechenden Pflanzen vorkommen. Denkbar ist auch, eine Wandseite vollflächig und/oder beide Wandseiten in nicht bepflanzten Bereichen zu verblenden, bspw. mit Steinplatten o. ä.

Niedrige Wände 15, die nur wenige Pflanzbehälter 14 übereinander gestapelt umfassen, können ohne ein Gerüst 41 auskommen. Bei höheren Wänden 15 oder kritischen Einbausituationen kann zusätzlich ein Gerüst 41 vorgesehen sein. In beiden Fällen werden die Pflanzbehälter 14 bevorzugt auf den Boden 19 aufgesetzt. Alternativ kann auch vorgesehen sein, dass für eine bessere Lastverteilung ein Streifenfundament eingebracht ist. Beispielsweise können hierfür bodenstabilisierende Werkstoffe, wie Geogitter, Geotextil usw., in Kombination mit mineralischen Schüttungen oder Ähnlichem vorgesehen sein.

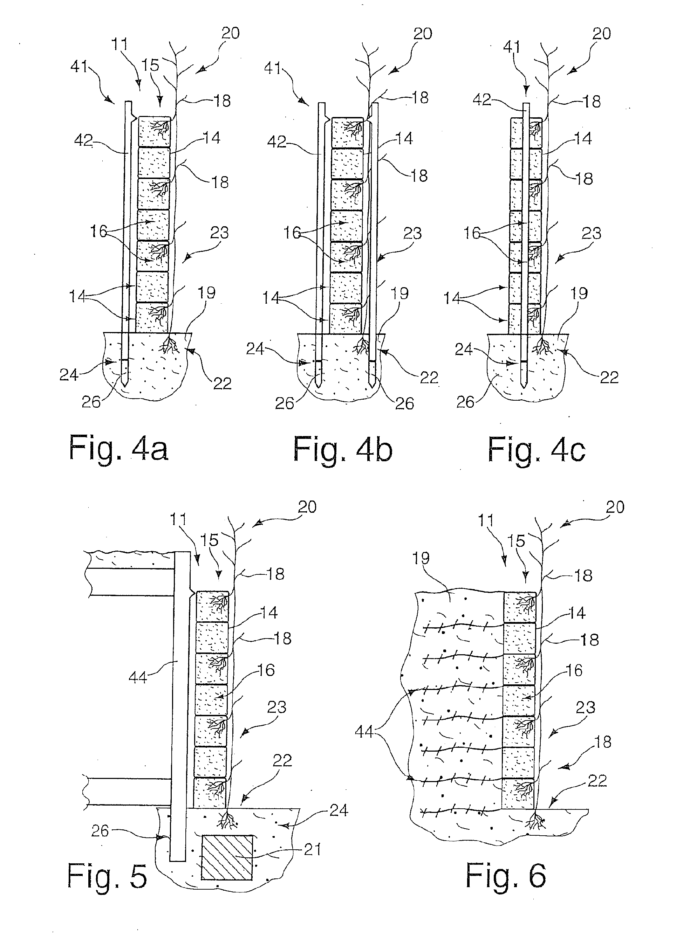

Bei der in Figur 1a dargestellten Ausführungsform des Bauwerkes 11 ist beispielsweise ein Fundament 25 im Boden 19 vorgesehen, um daran, wie in den Figuren 4a bis c beispielhaft dargestellt ist, eine oder mehrere Gerüststützen 42 zu befestigen. Das Fundament 24 ist im Boden 19 eingebracht und weist bevorzugt zur Oberfläche ein druckfestes Pflanzsubstrat auf, auf welchem die Pflanzbehälter 14 aufliegen. Dieses Fundament 24 weist beispielsweise pfostenförmige Anker 26 auf, um eine höhere Stabilität zu erzielen

Zwischen den pfostenförmigen Ankern 26 ist bevorzugt der Wasserspeicher 21 vorgesehen. Ergänzend kann z. B. unterhalb des Fahrbahnbelages 12 oder auch benachbart im Boden 19 ein Regenwasserspeicher 27 oder ein Regenwasseraufnahmebecken vorgesehen sein, aus welchem der Wasserspeicher 21 des Bauwerkes 11 mit Niederschlagswasser versorgt wird.

Dabei kann auch eine Anpassung an verschiedene Standardgrößen der Pflanzbehälter 14, die in der Länge und/oder der Breite voneinander abweichen können, erfolgen.

In den Pflanzbehältern 14 sind vorproduzierte Pflanzen 18 vorgesehen. Diese können sowohl unter Glas als auch im Freiland separat zum anschließenden Einsetzen in die Pflanzbehälter 14 oder in den Pflanzbehältern 14 produziert werden. Hierfür eignen sich baumartige, strauchartige, schlingend, kriechend oder kletternd wachsende mehrjährige, verholzende Pflanzen. Alternativ oder zusätzlich zu diesen Pflanzen in den Pflanzbehältern 14 können auch weitere Pflanzen im Erdboden an die Wand 15 angrenzend gepflanzt werden, die durch Pfropfen oder durch dauerhaftes und festes Aufeinanderdrücken mit den Pflanzen in den Pflanzbehältern 14 verbunden werden. Durch den modularen Aufbau der Wand 15 mit den einzelnen Pflanzbehältern 14 mit auch nur teils darin angeordneten Pflanzen 18 sowie über die unterste im Boden 19 eingesetzte Pflanze 18 wird durch die Pflanzenaddition eine Pflanzenanordnung mit einer Baumkrone in sehr kurzer Zeit möglich, die sich aus dem Boden 19 und/oder Wasserspeicher 21 selbst mit Wasser versorgen können.

In Figur 1b ist beispielhaft eine Pflanzenanordnung 23 durch eine vertikale Verbindung der einzelnen Pflanzen 18 dargestellt. Dabei können nicht nur die unmittelbar übereinander liegenden Pflanzen 18 miteinander verbunden werden, sondern auch die benachbarten Pflanzen 18 in einer benachbarten Spalte der übereinander gestapelten Pflanzbehältern 14. Beispielsweise können die Pflanzbehälter 14 mit den darin vorkultivierten Pflanzen 18 auch schachbrettförmig zum Aufbau der Wand 15 angeordnet und anschließend eine gleichmäßige vertikale und/oder diagonale Verknüpfung der Pflanzen 18 geschaffen werden.

Das Bauwerk 11 kann somit ausschließlich aus Pflanzbehältern 14 bestehen, die teils oder alle vorkultiviert sind, um eine bepflanzte oder begrünte Wand 15 auszubilden. Ergänzend kann das Bauwerk 11 auch ein Fundament 24 und/oder ein Gerüst 41, insbesondere ein Gleitgerüst, und/oder einen Wasserspeicher 21 und/oder eine Aufständerung 25, welche zwischen dem Fundament 24 und der Wand 15 angeordnet ist, umfassen.

In Figur 2a ist eine perspektivische Ansicht des Pflanzbehälters 14 des Pflanzbehältersystems dargestellt. Dieser Pflanzbehälter 14 ist als ein sogenannter 2-er Pflanzbehälter oder 2-er Baustein ausgebildet, der das Rastermaß von zwei sogenannter 1-er Pflanzbehältern 15 umfasst, die fest miteinander verbunden sind. Bei diesem Ausführungsbeispiel besteht das Pflanzbehältersystem aus zwei Typen von Pflanzbehältern 14, 15, und zwar dem ersten Pflanzbehältertyp, also dem 1-er Pflanzbehälter 15 und dem zweiten Pflanzbehältertyp, also dem 2-er Pflanzbehälter 14.

Der 1-er Pflanzbehälter 15 umfasst vier Stützen 31, welche jeweils im Eckbereich eines Bodens 32 angeordnet sind. Die Grundfläche des Pflanzbehälters 15 ist quadratisch ausgebildet. Die einzelnen Stützen 31 sind durch Aussteifungselemente 33 miteinander verbunden. Diese Aussteifungselemente 33 sind insbesondere als Zugelement ausgebildet und können beispielsweise aus einem Flachstahl oder einem gewinkelten Profilelement oder einem sonstigen Profilelement ausgebildet sein. Bevorzugt ist jeweils nahe dem oberen Rand der Stützen 31 ein quer verlaufendes Aussteifungselement 33 vorgesehen und zwischen zwei Stützen 31 zumindest ein diagonal verlaufendes Aussteifungselement 33 angeordnet.

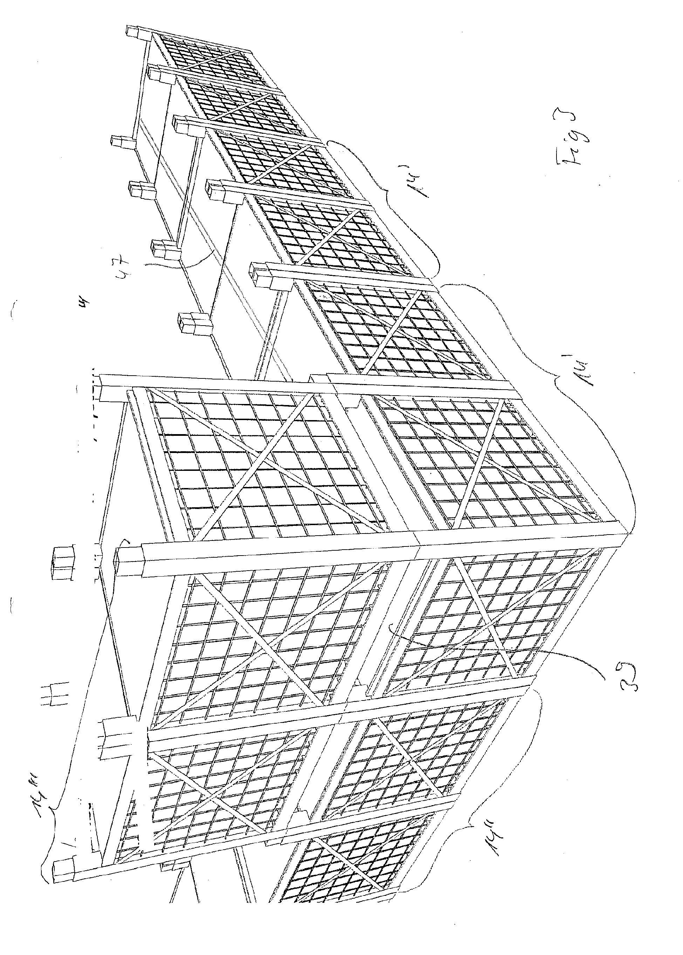

Der Boden 32 kann aus einem Gitterrost bestehen. Anstelle des Gitterrostes kann auch eine geschlossene Fläche vorgesehen sein, um insbesondere eine Wurzelbildung nach unten zu vermeiden, dass zumindest in diese Richtung ein Wurzelraum des Pflanzbehälters begrenzt ist. In Analogie können auch ein oder mehrere Seitenwände 37 geschlossen werden, so dass nur noch eine zur Sichtseite weisende Seitenwand durchwachsbar ist oder dass die zumindest eine Pflanze 18 nur noch aus einem Auswachsspalt 39 (Fig. 3) herauswächst. Ebenso kann eine Bodenplatte auf dem Gitterrost aufgelegt oder an diesem angebracht werden.

Die Stützen 31 sind als Rohr, insbesondere Quadrat- oder Rundrohr, ausgebildet. Am oberen Ende der Stütze 31 ist ein erster Verbindungsabschnitt 34 vorgesehen, der zur Aufnahme eines zweiten Verbindungsabschnittes 36 an der Stütze 31 eines darüber angeordneten Transportbehälters 14, 15 dient. Dieser zweite Verbindungsabschnitt ist an der Stütze 31 am gegenüberliegenden Ende zum ersten Verbindungsabschnitt 34 angeordnet. Dadurch wird eine einfach lösbare Steckverbindung geschaffen, die zusätzlich noch durch einen Stift oder eine Verschraubung abhebesicher verbindbar ist. Durch diese Ausgestaltung wird ermöglicht, dass senkrecht nach unten verlaufender Lastabtrag über die Stütze 31 ermöglicht ist.

Aus einem vorbeschriebenen 1-er Pflanzbehälter 15 wird ein in Figur 2a dargestellter 2-er Pflanzbehälter 14 gebildet, in dem zwei Pflanzbehälter 15 aneinander gereiht und fest miteinander verbunden werden. Dabei kann vorgesehen sein, dass die beiden aneinander grenzenden Stützen 31 miteinander verschweißt, verschraubt oder durch eine Steckverbindung zueinander positioniert werden, so dass bei den letzten beiden Alternativen bedarfsweise aus einem 2er- Pflanzbehälter zwei 1 er-Pflanzbehälter und umgekehrt geschaffen werden können.

Das Pflanzbehältersystem kann zusätzlich zu einem 1-er Pflanzbehälter 15 und einem 2-er Pflanzbehälter 14 ein 3-er, 4-er usw. Pflanzbehälter umfassen. Dies ist abhängig von der Größe des Rastermaßes eines Pflanzbehälters 15 und der Höhe des Pflanzbehälters 15.

Durch die lösbare Verbindung zwischen zwei Pflanzbehälter 15 kann wahlweise eine Anordnung von 2-er, 3-er, 4-er Pflanzbehälter usw. geschaffen werden.

In Figur 2b ist eine weitere Ansicht des Pflanzbehälters 14 perspektivisch dargestellt. Bei diesem Pflanzbehälter 14 sind Seitenwände 37 eingesetzt. Diese Seitenwände 37 sind gitterförmig oder als Gitterelement ausgebildet und können mit der Stütze 31 und/oder einem als Querstrebe ausgebildeten Aussteifungselement 33 miteinander verbunden oder befestigt werden. Beispielsweise kann an einer Innenseite der Seitenwand 37 ein Vlies oder ein Gewebe, insbesondere eine Kokosmatte, aufgebracht sein. Ebenso können auf der Innenseite vorkultivierte Vegetationselemente eingebracht werden.

Das zur Queraussteifung dienende Aussteifungselement 33 ist bevorzugt mit Abstand unterhalb einer Auflageebene für den darüber angeordneten Pflanzbehälter vorgesehen, so dass zwischen einer Aufnahmekante 38 an der Stütze 31, durch welche die Auflageebene gebildet wird, und dem Aussteifungselement 33 ein Freiraum oder Auswachsspalt 39 (Fig. 3) verbleibt, durch welchen beispielsweise die Pflanze herauswachsen kann. Alternativ kann die Pflanze auch durch die Gitterstruktur oder Seitenwand 37 zur Sichtseite heraustreten.

Die Pflanzbehälter 14, 15 können aus Stahl, verzinktem Stahl, Edelstahl oder auch aus Kunststoff bestehen. Ebenso kann auch eine Materialkombination dahingehend ausgebildet werden, dass beispielsweise die Stützen 31 und die Aussteifungselemente 33 aus Metall bestehen und der Boden und/oder die Seitenwände 27 aus Kunststoff.

In dem Pflanzbehälter 14 können als Pflanzsubstrat jegliche durchwurzelungsfähigen, organischen und/oder anorganischen Materialien oder deren Mischungen zur Anwendung kommen, wie beispielsweise Torf, Blähton, Sand, Kies, Mineralwolle, Kokosfaser, gebrochener Bimsstein usw.

In Figur 3 ist eine perspektivische Ansicht von teilweise übereinander gestapelten Pflanzbehältern 14 eines Pflanzbehältersystems dargestellt, um beispielhaft die Ausgestaltungsmöglichkeiten und die Anordnung mittels eines Mauerwerkverbandes, insbesondere Halbverbandes, darzustellen. Gleichzeitig geht daraus hervor, dass in einfacher Weise eine steife Eckausbildung und Verlegung über Eck ermöglicht ist. An eine erste untere Reihe von Pflanzbehältern 14', schließt sich rechtwinklig dazu ein Pflanzbehälter 14" an, der mit einer Stirnseite an eine Seitenwand 27 des Pflanzbehälters 14' angrenzt. Darüber liegend ist ein Pflanzbehälter 14"' angeordnet. Daraus wird auch ersichtlich, dass der zweite Verbindungsabschnitt 36 der Stütze 31 des Transportbehälters 14"' den ersten Verbindungsabschnitt 34 der Stütze 31 des Transportbehälters 14' beziehungsweise 14" umgreift, so dass durch diesen Transportbehälter 14"' eine feste Anordnung der beiden darunter liegenden Pflanzbehälter 14' und 14" gegeben ist. Ein solcher Halbverband kann sich dann entlang der Reihe der Transportbehälter 14' sowie der Reihe der Transportbehälter 14" erstrecken. Bei der übereinander gestapelten Anordnung der Pflanzbehälter 14' beziehungsweise 14" und 14"' wird ersichtlich, dass zwischen den übereinander liegenden Seitenwänden 27 ein Freiraum oder ein Auswachsspalt 39 ausgebildet ist, durch welchen die Pflanze 18 frei herauswachsen kann.

Durch die Anordnung der einzelnen Pflanzbehältertypen 14, 15 nebeneinander und übereinander, wird desweiteren ermöglicht, dass zwischen zwei übereinander angeordneten Reihen von Pflanzbehältern 14, 15 ein oder mehrere Bewässerungsschläuche 47 eingelegt werden können, wodurch eine Wasserversorgung für die Pflanzen sichergestellt werden kann. Aufgrund des Freiraumes zwischen den zwei übereinandergestapelten Pflanzbehälter 14, 15 kann sogar ein Sprühsystem eingerichtet werden, so dass eine großflächige Wasserversorgung bspw. mit einem Bewässerungsschlauch sichergestellt werden kann.

In Figur 4a ist ein Bauwerk 11 dargestellt, bei dem die Wand 15 aus mehreren übereinander gestapelten Pflanzbehältern 14 besteht, die durch ein Gerüst 41 gegen Umkippen gesichert ist. Dies erfolgt bei dieser Ausführungsform beispielsweise durch zumindest eine Gerüststütze 42, die einseitig zur Wand 15 angeordnet ist. Dabei ist bevorzugt vorgesehen, dass die Verbindung zwischen der Gerüststütze 42 und der Wand 15, insbesondere zum obersten Pflanzbehälter 14, in vertikaler Richtung gleitend ausgebildet ist. Das bedeutet, dass sich die Wand 15 setzen kann und die vertikal wirkenden Kräfte von der Wand 15 selbst beziehungsweise von den übereinander angeordneten Pflanzbehältern 14 in den Boden 19 abgetragen werden und nicht durch das Gerüst 41 beziehungsweise die Gerüststütze 42. Diese sichert die Wand 15 in horizontaler Richtung, also gegen Umkippen. Die Gerüststütze 42 kann wiederum an dem Fundament 24, welches zur Aufnahme der Gerüststütze 42 dient, befestigt sein oder durch einen separaten pfostenförmigen Anker 26 in Form eines Einzelfundamentes im Boden 19 verankert werden.

Alternativ kann die in Figur 4a dargestellte Gerüststütze 42 gegenüberliegend zur dargestellten Wand 15 nochmals eine weitere, nicht näher dargestellte Wand, weitere vegetabile Elemente, Verblendungen o. ä. sichern.

In Figur 4b ist eine alternative Ausführungsform zu Figur 4a dargestellt. Bei dieser Ausführungsform ist beidseitig zur Wand 15 jeweils zumindest eine Gerüststütze 42 vorgesehen. Bei dieser Ausführungsform kann beispielsweise ein Fundament 24 vorgesehen sein, welches zwei Anker 26 umfasst, die über eine Aufständerung miteinander verbunden sind, um anschließend jeweils die Gerüststütze 42 aufzunehmen. Alternativ kann jede Gerüststütze 42 auch durch ein Einzelfundament oder in zwei Reihen von Gerüststützen 42 durch Streifenfundamente aufgenommen werden. Ergänzend kann bei dieser Ausführungsform beispielsweise nach zwei, drei oder vier übereinander gestapelten Pflanzbehältern 14 eine Querverbindung zwischen den beiden Gerüststützen 42 eingebaut werden, welche die beiden Gerüststützen 42 parallel zueinander fixiert und vorzugsweise gleitend an den Gerüststützen 42 angreift. Eine solche Querverbindung kann in Analogie zu den weiteren Aufnahmen gleitend an den Gerüststützen angeordnet werden.

In Figur 4c ist eine alternative Ausführungsform zu den Figuren 4a und b dargestellt. Die zumindest eine Gerüststütze 42 ist in den Pflanzbehältern 14 integriert. Dies kann derart erfolgen, dass zwischen zwei übereinander gestapelten Reihen von Pflanzbehältern 14 eine Gerüststütze 42 vorgesehen ist oder dass diese Gerüststützen 42 innerhalb der Pflanzbehälter 14 angeordnet sind und den Boden 32 der Pflanzbehälter 14 durchdringen.

In Figur 5 ist eine weitere alternative Ausgestaltung des Bauwerkes 11 dargestellt. Bei dieser Ausführungsform wird beispielsweise eine Tunnelwand, eine Hauswand oder eine sonstige Wand durch das Bauwerk 11 verkleidet. In diesem Fall kann das Gerüst 41 entfallen, da die Sicherung der Pflanzbehälter 14 über die Wand 44 erfolgen kann, wobei die vertikal gleitende Anordnung eines an dem Pflanzbehälter angeordneten Halteelementes zur zu verkleidenden Wand beibehalten bleibt.

Eine weitere alternative Ausgestaltung des Bauwerkes 11 ist in Figur 6 dargestellt. Hierbei wird das Bauwerk 11 zur Abstützung eines Hanges verwendet beziehungsweise es erfolgt ein einseitiger Erdanschluss. Diese Anordnung kann auch in Kombination im Gewässerschutz eingebaut sein. In einer solchen Ausführungsform können die einzelnen Pflanzbehälter 14 durch Erdanker oder Rückverspannungselemente 46 zum Boden 19 gehalten werden. Dadurch ist auch ein Erosionsschutz gegeben. Eine solche Anordnung kann auch im Gewässerbereich vorgesehen sein und ermöglicht gleichzeitig eine Prallhangstatik.

## Patentansprüche

1. Verfahren zur Herstellung eines Bauwerkes (11) aus technischen und pflanzlichen Komponenten, welches zumindest eine bepflanzte Wand (15) umfasst, **dadurch gekennzeichnet, dass**
- einzelne oder alle Pflanzbehälter (14), die für einen Aufbau der Wand (15) eingesetzt werden, mit einem Pflanzsubstrat (16) zumindest teilweise befüllt werden und in einzelnen oder in allen mit Pflanzsubstrat (16) befüllten Pflanzbehältern (14) eine oder mehrere Pflanzen (18) vorkultiviert oder eingepflanzt werden, so dass die Triebe der Pflanzen (18) aus zumindest einer Seitenwand des Pflanzbehälters (14) zumindest teilweise herausragen und
- dass ein oder mehrere nebeneinander angeordnete Pflanzbehälter (14) und mehrere Pflanzbehälter (14) übereinander gestapelt und zur Wand (15) zusammengesetzt werden,
- dass nach dem Aufbau der Wand (15) mit mehreren Pflanzbehältern (14) die in den Pflanzbehältern (14) zueinander benachbarten Triebe der Pflanzen (18) durch Aufpfropfen oder festes und dauerhaftes Aufeinanderdrücken zur Pflanzenaddition mit einer untersten im Boden (19) eingepflanzten Pflanze (18) miteinander verbunden werden, so dass die Triebe der Pflanzen (18) zusammenwachsen und zumindest eine von der untersten, im Boden eingepflanzten Pflanze (18) bis zur obersten Pflanze (18) im Pflanzbehälter (14) der Wand (15) verwachsene Pflanzenanordnung (23) gebildet wird.

2. Verfahren nach Anspruch 1, **dadurch gekennzeichnet, dass** die übereinander angeordneten Pflanzen (18) miteinander verbunden werden.

3. Verfahren nach Anspruch 1, **dadurch gekennzeichnet, dass** nach dem Herstellen der verwachsenen Pflanzenanordnung (23) die Wurzeln der einzelnen Pflanzen (18) in den Pflanzbehältern (14) von der Pflanzenanordnung (23) abgetrennt und die Pflanzenanordnung (23) durch Wurzeln (22) im Boden (19) versorgt werden.

4. Pflanzbehältersystem zur Bildung eines Bauwerkes (11) aus zumindest einem ersten und zumindest einem zweiten Pflanzbehälter (14, 15), mit einer Tragstruktur (28), welche in einem Rastermaß Stützen (31) aufweist, die durch einen Boden (32) miteinander verbunden und mit Aussteifungselementen (38) zueinander positioniert sind, und mit einer zwischen zwei Stützen (31) anbringbaren Seitenwand (37), wobei die Stützen (31) an ihren oberen Enden einen ersten Verbindungsabschnitt (34) zur Aufnahme eines weiteren Verbindungsabschnittes (36) an einer Stütze (31) eines darüber anordenbaren Pflanzbehälters (14, 15) aufweisen, wobei der erste Pflanzbehälter (15) einen quadratischen Boden (32) umfasst, der das Rastermaß der Stützen (31) bestimmt und der zweite Pflanzbehälter (14) aus zwei aneinander gereihte und miteinander verbundenen ersten Pflanzbehälter (15) entspricht.

5. Pflanzbehältersystem nach Anspruch 4, **dadurch gekennzeichnet, dass** der Boden (32) des Pflanzbehälters (14, 15) und/oder die zumindest eine Seitenwand (37) als Gitterrost ausgebildet ist.

6. Pflanzbehältersystem nach Anspruch 4, **dadurch gekennzeichnet, dass** der Pflanzbehälter (14, 15), insbesondere der Boden (32) und/oder die zumindest eine Seitenwand (37), vor dem Befüllen mit Pflanzsubstrat (16) mit einer Hüllstruktur (29), insbesondere einem Vlies oder Gewebe, ausgekleidet ist.

7. Pflanzbehältersystem nach Anspruch 4, **dadurch gekennzeichnet, dass** als Pflanzsubstrat (16) im Pflanzbehälter (14, 15) durchwurzelungsfähige, organische und/oder anorganische Materialien und deren Mischungen vorgesehen sind.

8. Pflanzbehältersystem nach Anspruch 4, **dadurch gekennzeichnet, dass** eine Höhe der Seitenwand (37) des Pflanzbehälters (14, 15) derart ausgebildet ist, dass diese mit dem darüber angeordneten Pflanzbehälter (14, 15) einen Auswachsspalt bildet.

9. Bauwerk aus technischen und pflanzlichen Komponenten, welches zumindest eine bepflanzte Wand (15) umfasst, **dadurch gekennzeichnet, dass** die Wand (15) aus einem Pflanzbehältersystem nach einem der Ansprüche 4 bis 8 aus einem oder mehreren nebeneinander anordenbaren und mehreren übereinander stapelbaren Pflanzbehälter (14, 15) aufgebaut ist, von denen einzelne oder alle Pflanzbehälter (14, 15) mit Pflanzsubstrat (16) zumindest teilweise befüllt sind und in einzelnen oder allen mit Pflanzsubstrat (16) befüllten Pflanzbehältern (14, 15) vorkultivierte Pflanzen (18) vorgesehen oder einsetzbar sind, deren Triebe zumindest teilweise aus einer Außenseite einer Seitenwand der Pflanzbehälter (14, 15) herausragen und dass die Pflanzbehälter (14, 15) in einem Mauerwerkverband angeordnet sind.

10. Bauwerk nach Anspruch 9, **dadurch gekennzeichnet, dass** zur Sicherung der zu einer Wand (15) gestapelten Pflanzbehälter (14, 15) ein Gerüst (41) vorgesehen ist, welches zumindest eine vertikale Gerüststütze (42) umfasst, durch welche der oder die Pflanzbehälter (14, 15) in vertikaler Richtung gleitend geführt und in horizontaler Richtung stabilisiert sind.

11. Bauwerk nach Anspruch 9, **dadurch gekennzeichnet, dass** die Gerüststütze (42) ein- und/oder beidseitig der Pflanzbehälter (14, 15) und/oder zwischen benachbarten Pflanzbehältern (14, 15) und/oder innerhalb der Pflanzbehälter (14, 15) angeordnet ist.

12. Bauwerk nach Anspruch 9, **dadurch gekennzeichnet, dass** die Gerüststütze (42) aus einem Rohr, einer Rohrhülse, einem zumindest abschnittsweise offenen Rohr oder einem offenen Profil, insbesondere einem C-Profil, besteht, an welchem ein in vertikaler Richtung verschiebbares Halteelement, das mit dem Pflanzbehälter (14, 15) fest verbunden ist, geführt ist.

13. Bauwerk nach Anspruch 9, **dadurch gekennzeichnet, dass** die Gerüststütze (42) in den Untergrund eingespannt ist, insbesondere in ein Fundament (24) eingestellt ist, oder an einem Zug-Druck-Fundament befestigt ist.

14. Bauwerk nach Anspruch 13, **dadurch gekennzeichnet, dass** zwischen oder benachbart zu pfostenartigen Ankern (26) des Fundamentes (24) zumindest ein Wasserspeicher (21) angeordnet ist.

15. Bauwerk nach Anspruch 14, **dadurch gekennzeichnet, dass** in den Pflanzbehältern (14, 15) Bewässerungskomponenten enthalten sind, welche beim Stapeln der Pflanzbehälter (14, 15) verbindbar sind und eine integrierte Bewässerung bilden.
